# NEW EUROPEAN PATENT SPECIFICATION

(11) **EP 0 332 231 B2**
(45) Date of publication and mention of the opposition decision: **12.06.2002**
(45) Mention of the grant of the patent: 12.04.1995
(21) Application number: 89107976.6
(22) Date of filing: 15.01.1986
(51) Int. Cl.: A01K 13/00, A01J 7/00, A01K 1/12

(54) **Device for milking animals, such as cows**
Gerät zum Melken von Tieren, z.B. Kühen
Dispositif de traite d'animaux, par exemple de vaches

(30) Priority: 16.01.1985 NL 8500090; 16.01.1985 NL 8500089; 16.01.1985 NL 8500091
(43) Date of publication of application: 13.09.1989
(62) Divisional of application: 86200064.3
(73) Proprietor: MAASLAND N.V., 3155 PD Maasland (NL)
(72) Inventor: van der Lely, Cornelis, Zug (CH)
(74) Representative: Corten, Maurice Jean F.M.

(56) References cited:
- EP-A- 0 091 892
- EP-A- 0 189 460
- EP-A- 0 189 954
- EP-A- 0 332 231
- EP-A- 0 332 231
- DE-A- 2 028 460
- DE-A- 2 153 047
- DE-A- 2 654 245
- GB-A- 918 766
- SE-C- 331 611
- US-A- 3 605 694
- US-A- 3 938 470
- US-A- 3 973 520
- US-A- 4 010 714
- The Concise Oxford Dictionary, 4th Edition, Page 930
- "De melkrobot komt eraan", W. Rossing, 25.07.84
- "Machine Milking", 1979, Pages 240 - 249

## Description

The invention relates to a device for milking animals, such as cows, comprising a milking parlour.

Generally, the milking parlour is a space where the animal can stand comfortably and where the necessary hygiene is observed.

Milking is effected by means of a milking machine having one or more milking clusters with teat cups attachable to the teats of the udder, whereafter the milking machine produces a vacuum in the cups, causing the milk to be sucked from the udder, either pulsatingly or non-pulsatingly. Before milking takes place, the udder and specifically the teats of the udder have to be cleaned; this can be done by spraying a liquid against the teats. Both milking cluster and cleaning means are coupled to the udder by means of a supporting arm.

A milking device wherein by means of a supporting arm a milking cluster is coupled to the udder and wherein a cleaning unit is present, is described in the European Patent Application EP-A-0 091 892. In the milking device described in said application, the milking cluster and cleaning means are carried by units. The units keep the milking cluster and cleaning means in position for service. The milking device is further provided with a robot that serves the units. The robot is provided with gripping means which at command can fetch the milking cluster or the cleaning means at a prede- " termined position. The gripping means include a telescopically extensible arm which is pivotable around an upwardly directed shaft and capable of upward and downward movement. In order to be able to attach the milking cluster and cleaning means to the udder, the robot and supporting unit must be placed on a specific position at the side of the milking place, as the legs of the cow and/or the frame of a box around the milking place can form obstacles for the robot arm and/or supporting unit.

The invention has for its object to provide a device for milking animals, in which the cleaning and/or drying unit can be brought under the udder of the animal in a more efficient way.

According to the invention the device for milking animals, such as cows, is characterized by the features of claim 1.

The location of the milking cluster and the cleaning and/or drying unit in combination with the second shaft permits a better approach of the udder. The units can be swung between the forelegs and the hindlegs of the animal and further backwards towards the udder of the animal. Due to the location of the units the chance is limited that the animal damages the units by stepping on them. The movement of the milking cluster and the cleaning and/or drying unit may be effected by computer-controlled motors.

According to a further characteristic of the invention, the bowl-shaped basin is supported near its centre by the support and comprises a discharge pipe located in the support. This accomplishes a simple and effective construction.

Additionally, in accordance with a characteristic of the invention, the bowl-shaped basin comprises an air pipe through which an air flow can be passed, the exit end of the air pipe being directed towards the animal's teats. The air pipe may constitute the discharge pipe.

For a better understanding of the invention an embodiment of the device for milking animals will now be described with reference to the accompanying drawings.
Figure 1 is a schematic cross-sectional view of a device for milking animals;
Figure 2 is a schematical view along line II-II of Figure 1;
Figure 3 is a schematic view of a cleaning and/or drying unit for the udder, which can be coupled automatically to the udder of the animal;
Figure 4 is a schematic view of a milking unit which can be coupled automatically to the udder of the animal;
Figure 5 shows schematically a side view along the line V - V of Figure 4;
Figure 6 shows schematically an installed device for milking animals; and
Figure 7 shows schematically a service vehicle for the device of Figure 6.

Corresponding components in the several figures are given the same reference numerals.

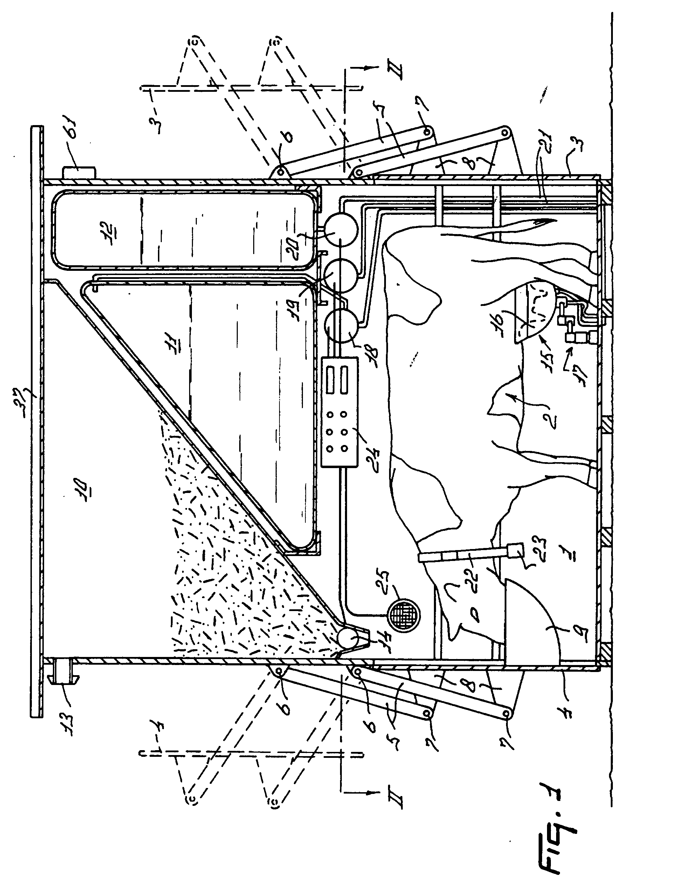

Figure 1 shows a device including a box 1 (milking parlour) for the animal 2, this box 1 having a door 3 through which the animal 2 can enter the box and a door 4 through which the animal can leave the box 1. Both doors 3, 4 are connected such to the device that their orientation remains substantially the same during opening and closing. To that end a parallelogram structure is present, including guide rods 5 which are connected hingeably to the frame of the device by means of their ends 6 and whose other ends 7 are connected capable of hinging to the supports 8 provided on the door. Figure 1 shows the two doors 3, 4 in their closed positions, whilst the open position is illustrated by means of dotted lines. The use of a parallelogram structure for operating the doors 3, 4 has the advantage that only a limited space is required for opening of the doors. Both doors are operable with the aid of control members, not shown, such as hydraulic or pneumatic cylinders, which can be applied and operated in known manner. As is shown in Figure 1, a manger 9 is attached to the door 4 from which the animal 2 can eat concentrate or another kind of fodder during its stay in the box 1. Because, on opening of the door 4, also the manger 9 is removed, the animal will tend to leave the box 1 earlier than otherwise.

Three storage containers 10, 11, 12 are shown over the box 1 for the animal 2. Storage container 10 is intended for fodder, for example concentrate, the animal can eat during its stay in the box 1. The storage container 10 has a fill opening 13 and a metering discharge outlet 14, which in answer to a control signal, feeds a predetermined quantity of fodder to the manger 9. The storage container 10 may be of such a construction that, as shown in Figure 1, the fodder can flow to the manger without any additional conveyor means.

Storage container 11 is intended for storing milk and for that purpose, can comprise means for cooling the milk stored in the container. Storage container 12 is intended to store a cleaning fluid, for example water, which can be used for cleaning, disinfecting and rinsing parts coming into contact with the milk, such as milk pipes, the milking cluster, the udder, or further parts eligible for cleaning or rinsing.

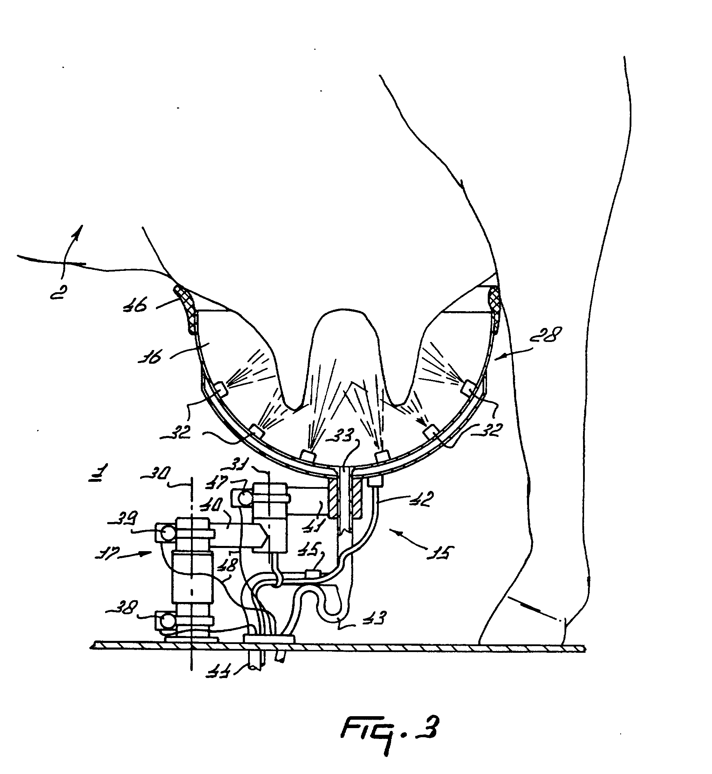

Figure 1 also shows a unit 15 which can be coupled to the udder of the animal 2. Unit 15 includes a bowl 16 which is in an almost close contact around the cow's udder and is supported in the centre by a support 17 which is attached to the floor and will be further described in the sequel with reference to Figure 3.

In addition, there is a device 18 for conveying milk to the storage tank 11. Device 19 has for its object to heat air and to convey that heated air to the udder-couplable device 15, as will be described in greater detail hereinafter. Using device 20, the detergent can be pumped from the storage container 12 to the udder-couplable arrangement 15. The conveyor conduits 21 required for this purpose are shown schematically.

A collar 22 is provided around the animal's neck, to which means 23 for identifying the animal are fastened. These means 23 may be constituted by an electronic or magnetic information carrier or a transmitter transmitting a signal which is specific to the given animal 2. Additonally, the device includes a computer 24 which controls the several functions of the device. For that purpose the computer 24 is connected to different portions of the device, which is illustrated in Figure 1 by means of lines.

The device further includes a loudspeaker 25 for producing sound or music so as to pass the desired signals on to the animal.

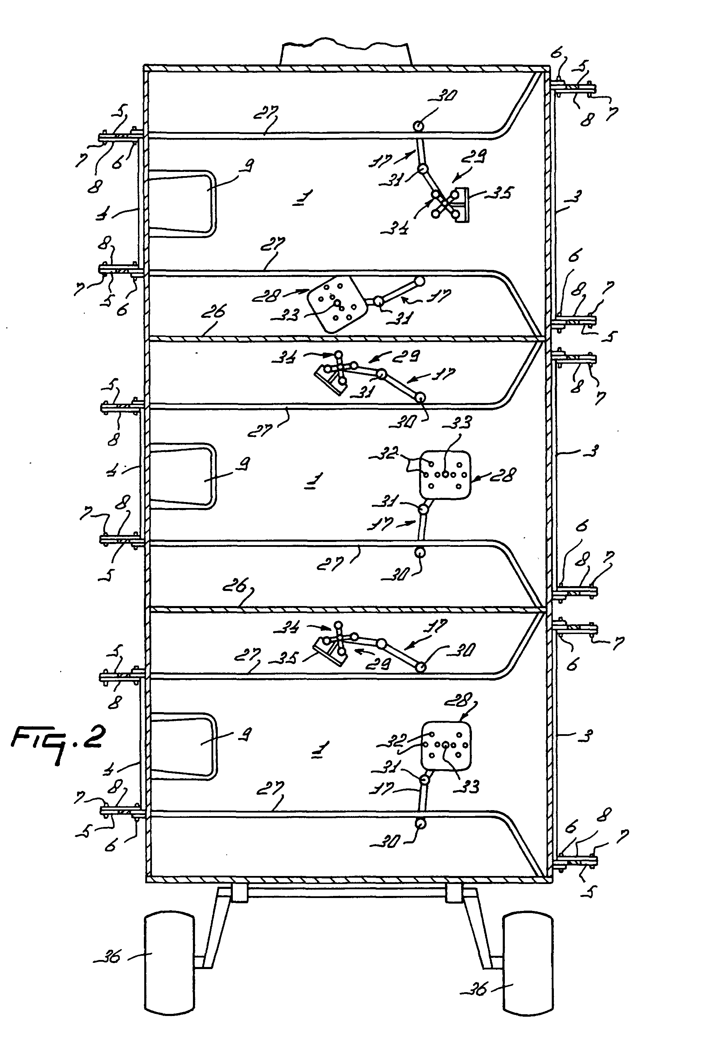

Figure 2 shows schematically three adjacent milking parlours or boxes 1, which are separated from each other by partitions 26. Furthermore guide means 27, constituted by, for example, rods are provided with the object of giving the animal only a limited freedom of movement. Figure 2 shows two types of devices couplable to the udder of the animal, namely a cleaning and/or drying unit 28 and a milking unit 29. These units 28, 29 may be in a non-operative position outside the area bounded by the guide means 27. When an animal is present in the box 1, unit 28 can be moved to under the animal from one side, whilst unit 29 can be moved to under the animal from the other side. Both units have a support including two substantially vertical hinge pins 30, 31, the support in the region of hinge pin 30 being fastened to the floor, so that the unit 28, 29 is capable of movement within a predetermined area. In addition, means are present for moving the units 28, 29 in the upward direction, as will be explained in greater detail hereinafter.

Unit 28 includes a bowl 16 (Figure 3) which is substantially in close contact around the animal's udder and has a plurality of spraying nozzles 32 for spraying a cleaning liquid against the animals udder, and a central aperture 33 for discharging used-up cleaning liquid and also for supplying air, which optionally may have been heated, with the object of drying the udder after cleaning.

Unit 29 includes a milking cluster 34 which is connectable to the teats of the udder and a shield 35, as will be explained in greater detail in the sequel.

The storage containers 10, 11 and 12 described in the foregoing, which can optionally be provided over the boxes 1, can extend over a plurality of boxes, whilst it is optionally alternatively possible to provide one or a plurality of storage containers for each box.

The described device for milking animals may be in the form of a mobile unit or built in a movable container which can in its totality be positioned in a desired location. Optionally the device may be provided, for this purpose, with wheels 36 (Figure 2), or other means useful for moving the implement. So as to enable positioning of the device in the open air, it may be provided with a roof 37 extending along the overall device (Figure 1).

Figure 3 shows in greater detail the unit 28 already shown in Figure 2. The unit 28 includes a bowl 16 which can be moved to under the animal and around its udder by means of support 17. Support 17 is capable of swivelling around hinge pin 30, the support being fastened to the floor in the region of this hinge pin. The support includes a first electric motor 38 for moving the device 38 upwards, for example by means of a spindle arranged concentrically to pin 30. Additionally, a second electric motor 39 is provided, so that swivelling around pin 30 of the support can be effected. The support furthermore comprises a second, substantially vertical hinge pin 31 whereby connecting members 40 and 41 of the support are capable of swivelling relative to each other. At its end, the connecting member 41 bears the bowl 16, which is provided with spray nozzles 32 and a central aperture 33. The aperture 33 provided centrally in the bowl 16 is made in the spot where the connecting member 41 is connected to the bowl 16.

A liquid, for example warm water, can be applied to the spray nozzles 32 through conduit 42 by means of device 20 (Figure 1). The used-up liquid can be discharged through outlet 33 and conduit 43 to any place outside the milking device. So as to enable drying of the udders after cleaning, device 19 (Figure 1) can optionally apply warm air through conduit 44, which air is also passed to the udder through aperture 33.

So as to ensure that the air applied through conduit 44 and the liquid discharged through conduit 43 can not mutually affect each other, a non-return valve 45 is provided in the embodiment shown in Figure 3 in conduit 44, which valve passes the air current supplied, but constitutes a shut-off means for any liquid from the other direction. Additionally, conduit 43 is provided with an S-curve, so that a liquid lock is formed, to ensure that the air supplied through conduit 44 cannot flow away through conduit 43.

The milking device as shown in Figure 3 is computer-controlled, such that the bowl 16 first assumes an appropriate position in a substantially horizontal plane, whereafter the bowl is moved up, so that it is in a position around the udder of the animal. So as to facilitate this procedure, the edge of the bowl is provided with a strip 46 of a flexible material. The conduits 42, 43 and 44 must be adequately flexible to follow the motions of the bowl 16. As has already been described in the foregoing, moving the bowl is effected by a first electric motor 38, which can adjust the unit in the vertical direction, a second electric motor 39 being present for rotation around the pin 30 and a third electric motor being present for the mutual rotation of the connecting members 40 and 41 around the pin 31. To that end, the computer is connected to each one of said motors by means of electric connections 48.

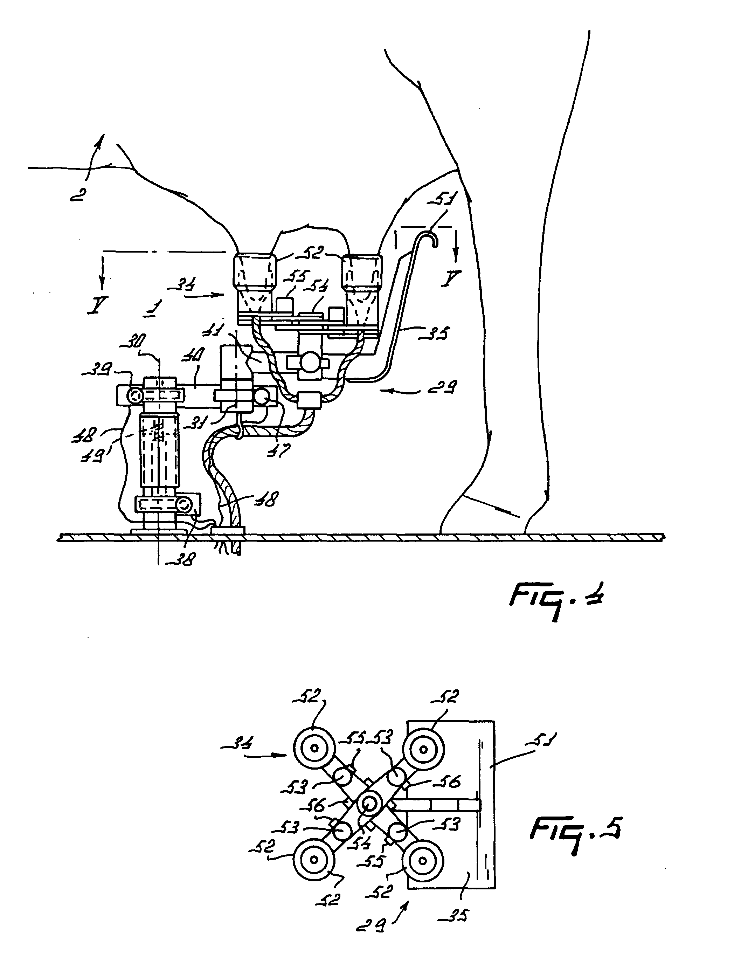

Figure 4 shows the unit 29 (see Figure 2). The unit comprises a milking cluster having four teat cups 52. These teat cups 52 may be of a conventional structure, but they may alternatively be of somewhat more flaring construction to facilitate connection to the teats. The support shown in Figure 4 is of the same type as shown in, and described with reference to, Figure 3. Using the computer-controlled electric motors 38, 39 and 47, the milking cluster can be moved to any desired position to enable its connection to the udder. The spindle 49 for height adjustment of the unit is shown schematically.

At one side of the milking cluster the arrangement shown in Figure 4 is provided with a plate 35 having a folded edge 51 at its top. The plate 35 has for its object to provide a shield between the hind legs of the animal and the milking cluster, more specifically for preventing the milking cluster from being contaminated.

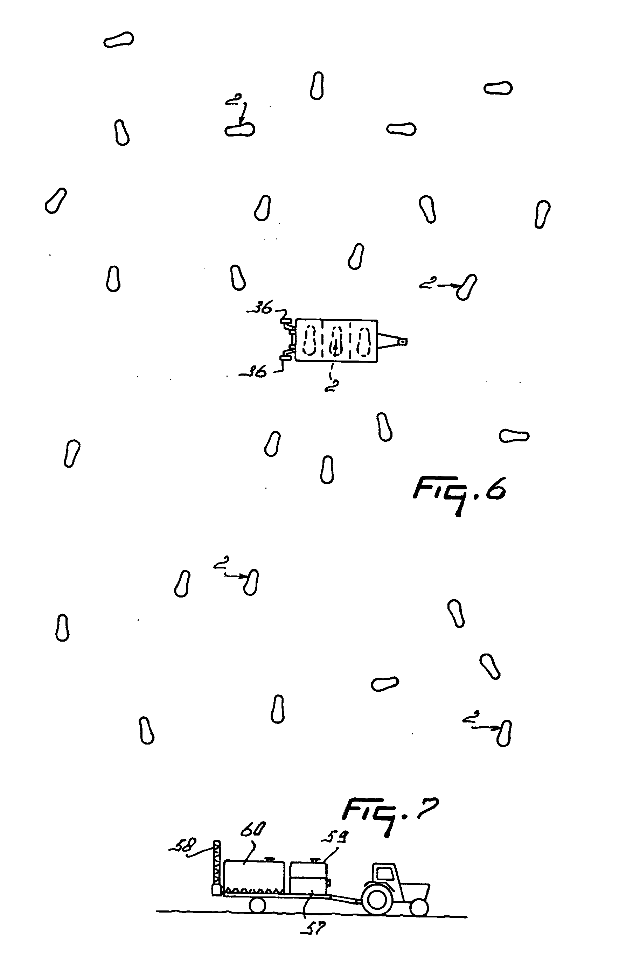

Figure 5 shows a side view along the line V-V of Figure 4, in which further details of the milking cluster are shown. In accordance with Figure 5, each teat cup 52 is connected, capably of hinging, to a central support 54, so that relative to the central support 54, each teat cup 52 is movable in a certain area. By means of small electric motors 55 and 56 each teat cup can be positioned relative to the central support 54 with the aid of the computer, so that the four teat cups 52, which together form the milking cluster, are arranged in a configuration which is adapted to the relevant animal.

Figure 6 shows schematically a mobile milking device comprising three milking parlours and being located in, for example, a meadow, so that animals 2, for example cows, walk around the implement.

Figure 7 shows a trailer placed behind a tractor, which trailer is provided with different storage containers 57, 59 and 60, for, for example, liquid, milk and fodder, respectively.

Using the tractor and trailer combination shown in Figure 7, a trip can be made to the milking device of Figure 6, with the object of collecting milk and of bringing fodder and liquid.

Although the device for milking animals can also be incorporated in any type of stable, the following description is based on a situation in which the milking device is installed in a meadow, as shown in Figure 6.

The animals walk freely around the automatic milking device. The object in mind is that all the animals make a more or less regular appearance in a milking parlour of the milking device, to be milked there. For that purpose the animals can be lured to the milking parlour by the presence of concentrate, it is however alternatively possible to call the animals by means of sound signals. To that end, each animal has a collar with a receiver attached thereto, which is connected to a loudspeaker located in the region of the animal's ears. In the milking device is a computer-controlled, transmitter, so that the computer can convey a call signal through the loudspeaker of the relevant cow. Thus, each desired animal can be invited to go to the milking parlour by means of, for example, agreeable sounds, as the animal then knows that there is, for example, concentrate available. Simultaneously, the animals whose presence in the neighbourhood of the milking parlour is undesired, may be given an unpleasant signal as soon as they are too close near the milking parlour. Instead of radio signals, it is alternatively possible to use sound signals generated by means of a loudspeaker, denoted by 61 in Figure 1. Since also identifying means are fastened to the collar of the cow, for example a transmitter transmitting given signals, sensor means of the milking device will sense the presence of a certain animal, after door 3 (Figure 1) has been opened by the computer so as to allow admittance to the milking parlour for the relevant animal. Depending on that specific animal, the computer supplies a predetermined, metered quantity of concentrate to the manger and a device for cleaning the udders is coupled to the udders. Because the animal eats the fodder supplied, it is in a given position and the computer can control the units to be coupled to the udder in such a manner that they are coupled in the appropriate way. A drying operation can follow after a cleaning operation, whereafter the device coupled to the udder moves back to its starting position and the milking cluster can be moved to under the animal from the other side and be coupled to the udder, also controlled by the computer, the mutual positions of the teat cups having been adapted to the udder of the specific animal. After the milking cycle has been terminated, the milking cluster returns to its starting position, whereafter door 4 is opened and both the door and the manger are moved, so that the animal can leave the milking parlour. To enable correct coupling of the relevant unit to the udder, the computer has the disposition of the relevant data of each animal, on the basis of which data the units 28, 29 are controlled.

In connection with an optimal milk production it is of utmost importance that the animal feels comfortable in all situations or is even positively influenced. This influencing can be done by means of sounds produced by a loudspeaker 25 provided in the milking parlour wall (Figure 1). This loudspeaker can be used in the first place for luring the animal, by producing a sound pleasant to the animal, for example a certain type of music. During milking, this music can be varied such that it promotes the milk production, for example by starting slowly and gradually passing into a more dynamic form. The same loudspeaker 25 can be used to encourage the animal to leave the milking parlour, by, for example, producing unpleasant sounds, for example shrill sounds.

It will be clear that the animal can also be lured to the milking parlour in any other suitable way. It may also be advantageous to have the animal decide itself whether it wants to be milked, for which purpose the sensor means detect the presence of the relative animal, whereafter that animal is permitted to enter the milking parlour. Thus, it is possible to raise milking to very many times per day, depending on the own needs of the animal, which may be advantageous for the milk production.

It is of course alternatively possible to incorporate the milking arrangement in an open stable or in any other type of stable.

## Claims

1. A device for milking animals, such as cows, comprising a milking parlour (1) with an entry door (3), an exit door (4) and lateral guide means (27) giving the animal only a limited freedom of movement and bounding the area of the milking parlour where the animal stands during the milking process and with a manger (9) attached to the exit door (4) of the milking parlour from which the animal can eat fodder during its stay in the milking parlour so that the animal then is in a given position in the milking parlour, the device comprising a computer-controlled milking machine with a milking cluster (34) couplable to the udder of the animal and with a unit (28) suitable for either spraying a liquid or for spraying a liquid and drying comprising a bowl-shaped basin (16) connectable to the udder of the animal and provided with spraying means (32) for spraying said liquid against the animal's udder and teats, said liquid being a cleaning, rinsing or disinfecting agent, the milking cluster (34) being supported on a milking cluster support (17, 40, 41) and the unit (28) suitable for either spraying a liquid or for spraying a liquid and drying being supported on a cleaning/drying unit support (17, 40, 41), said milking cluster support (17, 40, 41) permitting an upwardly and downwardly movement of the milking cluster (34), said cleaning/drying unit support (17, 40, 41) permitting an upwardly and downwardly movement of the unit (28) suitable for either spraying a liquid or for spraying a liquid and drying, the milking cluster (34) being located in its non-operative position on one side of said area and outside said area such that it is adjacent to the udder of the animal when the animal is in the milking parlour, the milking cluster support (17, 40, 41) and the cleaning/drying unit support (17, 40, 41) each comprising a first vertical hinge pin (30) and being fastened to the floor of the milking parlour in the region of the first hinge pin (30), each support (17) comprising a first connecting member (40) swivelling around the first vertical hinge pin (30), a second vertical hinge pin and a second connecting member (41) connected to the first connecting member (40) by the second vertical hinge pin (31), the milking cluster (34) and the bowl-shaped basin of the unit (28) suitable for either spraying a liquid or for spraying a liquid and drying being supported on the respective second connecting member (41) of the support (17), the first vertical hinge pin (30) permitting a swivelling movement of the support (17) and the second vertical hinge pin (31) permitting a swivelling movement of the connecting members (40, 41) relative to each other so that the resulting movements of the milking cluster (34) and the unit (28) suitable for either spraying a liquid or for spraying a liquid and drying are caused in such a way that they approach the udder of the animal from the respective side of the milking parlour between a foreleg and a hindleg of the animal and then move backwards to the udder, the unit (28) suitable for either spraying a liquid or for spraying a liquid and drying being couplable to the udder of the animal, the unit (28) suitable for either spraying a liquid or for spraying a liquid and drying being located in its non-operative position on the other side of said area and outside said area such that it is adjacent to the udder of the animal when the animal is in the milking parlour.

2. A device as claimed in claim 1, **characterized in that** the spraying means (32) are directed upwardly.

3. A device as claimed in claim 1 or 2, **characterized in that** the bowl-shaped basin (16) is supported near its centre by the support (17) and comprises a discharge pipe (43) located in the support (17).

4. A device as claimed in claim 3, **characterized in that** the bowl-shaped basin (16) comprises an air pipe (44) through which an air flow can be passed, the exit end of the air pipe (44) being directed towards the animal's teats.

5. A device as claimed in claim 4, **characterized in that** the air pipe (44) constitutes the discharge pipe (43).

6. A device as claimed in any one of the preceding claims, **characterized in that** the movement of the unit (28) is effected by computer-controlled electric motors (38, 39, 47).

## Patentansprüche

1. Vorrichtung zum Melken von Tieren, wie z. B. Kühen, die einen Melkstand (1) mit einer Eingangstür (3), einer Ausgangstür (4) und seitlichen Führungen (27) umfaßt, die dem Tier nur eine begrenzte Bewegungsfreiheit gewähren und den Bereich des Melkstandes, in dem das Tier während des Melkvorganges steht, begrenzen, sowie mit einem an der Ausgangstür (4) des Melkstandes angebrachten Futtertrog (9), aus dem das Tier während seines Aufenthaltes in dem Melkstand Futter aufnehmen kann, so daß sich das Tier dann in einer vorgegebenen Position in dem Melkstand befindet, wobei die Vorrichtung eine computergesteuerte Melkmaschine mit einem an das Euter des Tieres anschließbaren Melkgeschirr (34) und eine Einheit (28) umfaßt, die zum Sprühen einer Flüssigkeit oder zum Sprühen einer Flüssigkeit und zum Trocknen geeignet ist, die einen beckenförmigen Behälter (16) umfaßt, der an das Euter des Tieres anschließbar und mit Sprühvorrichtungen (32) versehen ist, um die Flüssigkeit auf das Euter und die Zitzen des Tieres zu sprühen, wobei die Flüssigkeit ein Reinigungs-, Spül- oder Desinfektionsmittel ist, wobei das Melkgeschirr (34) auf einem Melkgeschirrträger (17, 40, 41) und die Einheit (28), die zum Sprühen einer Flüssigkeit oder zum Sprühen einer Flüssigkeit und zum Trocknen geeignet ist, auf einem Reinigungs-/Trocknungseinheitenträger (17, 40, 41) abgestützt ist, wobei der Melkgeschirrträger (17, 40, 41) eine Auf- und Abwärtsbewegung des Melkgeschirrs (34) erlaubt, wobei der Reinigungs-/Trocknungseinheiten-träger (17, 40, 41) eine Auf- und Abwärtsbewegung der Einheit (28) erlaubt, die zum Sprühen einer Flüssigkeit oder zum Sprühen einer Flüssigkeit und zum Trocknen geeignet ist, wobei das Melkgeschirr (34) in seiner Ruhelage auf einer Seite des Bereiches und außerhalb des Bereiches derart angeordnet ist, daß es neben dem Euter des Tieres angeordnet ist, wenn sich das Tier im Melkstand befindet, wobei der Melkgeschirrträger (17, 40, 41) und der Reinigungs-/Trocknungseinheitenträger (17, 40; 41) jeweils einen ersten vertikalen Gelenkstift (30) umfassen und am Boden des Melkstandes im Bereich des ersten Gelenkstiftes (30) befestigt sind, wobei jeder Träger (17) ein erstes, um den ersten vertikalen Gelenkstift (30) schwenkendes Verbindungsglied (40), einen zweiten vertikalen Gelenkstift und ein zweites Verbindungsglied (41) umfaßt, das mit dem ersten Verbindungsglied (40) durch den zweiten vertikalen Gelenkstift (31) verbunden ist, wobei das Melkgeschirr (34) und der beckenförmige Behälter der Einheit (28), die zum Sprühen einer Flüssigkeit oder zum Sprühen einer Flüssigkeit und zum Trocknen geeignet ist, an dem jeweiligen zweiten Verbindungsglied (41) des Trägers (17) abgestützt ist, wobei der erste vertikale Gelenkstift (30) eine Schwenkbewegung des Trägers (17) und der zweite vertikale Gelenkstift (31) eine Schwenkbewegung der Verbindungsglieder (40, 41) relativ zueinander erlaubt, so daß die daraus resultierenden Bewegungen des Melkgeschirrs (34) und der Einheit (28), die zum Sprühen einer Flüssigkeit oder zum Sprühen einer Flüssigkeit und zum Trocknen geeignet ist, in der Weise erfolgen, daß diese sich dem Euter des Tieres von der jeweiligen Seite des Melkstandes zwischen einem Vorderbein und einem Hinterbein des Tieres hindurch nähern und dann nach hinten zum Euter bewegen, wobei die Einheit (28), die zum Sprühen einer Flüssigkeit oder zum Sprühen einer Flüssigkeit und zum Trocknen geeignet ist, an das Euter des Tieres anschließbar ist, wobei die Einheit (28), die zum Sprühen einer Flüssigkeit oder zum Sprühen einer Flüssigkeit und zum Trocknen geeignet ist, in ihrer Ruhelage auf der anderen Seite des Bereiches und außerhalb des Bereiches angeordnet ist, so daß sie neben dem Euter des Tieres angeordnet ist, wenn sich das Tier im Melkstand befindet.

2. Vorrichtung nach Anspruch 1,
**dadurch gekennzeichnet, daß** die Sprühvorrichtung (32) nach oben gerichtet ist.

3. Vorrichtung nach Anspruch 1 oder 2,
**dadurch gekennzeichnet, daß** der beckenförmige Behälter (16) nahe seiner Mitte durch den Träger (17) abgestützt ist und eine Abflußleitung (43) umfaßt, die in dem Träger (17) angeordnet ist.

4. Vorrichtung nach Anspruch 3,
**dadurch gekennzeichnet, daß** der beckenförmige Behälter (16) eine Luftleitung (44) aufweist, durch die ein Luftstrom zu leiten ist, wobei das Austrittsende der Luftleitung (44) auf die Zitzen des Tieres gerichtet ist.

5. Vorrichtung nach Anspruch 4,
**dadurch gekennzeichnet, daß** die Luftleitung (44) die Abflußleitung (43) bildet.

6. Vorrichtung nach einem der vorhergehenden Ansprüche,
**dadurch gekennzeichnet, daß** die Einheit (28) durch computergesteuerte Elektromotoren (38, 39, 47) bewegt wird.

## Revendications

1. Dispositif pour traire les animaux, tels que des vaches, comportant une stalle de traite (1) avec une porte d'entrée (3), une porte de sortie (4) et des moyens de guidage latéraux (27) n'accordant à l'animal qu'une liberté de mouvement limitée et limitant la surface de la stalle de traite où l'animale se tient pendant le processus de traite et avec une mangeoire (9) fixée à la porte de sortie (4) de la stalle de traite, à laquelle l'animal peut prendre sa nourriture pendant qu'il se trouve dans la stalle de traite, de sorte que l'animal se trouve ainsi dans une position donnée dans la stalle de traite, le dispositif comprenant une machine à traire commandée par ordinateur, avec un groupe de traite (34) connectable au pis de l'animal et avec une unité (28), adaptée pour soit pulvériser un liquide, soit pulvériser un liquide et sécher, comportant une cuvette en forme de bol (16) reliable au pis de l'animal et pourvue de moyens de pulvérisation pour pulvériser ledit liquide sur le pis et les mamelles de l'animal, ledit liquide étant un agent de nettoyage, de rinçage ou de désinfection, le groupe de traite (34) étant monté sur un support de groupe de traite (17, 40, 41) et l'unité (28) adaptée pour soit pulvériser un liquide, soit pulvériser un liquide et sécher, étant montée sur un support d'unité de nettoyage/séchage (17, 40, 41), ledit support de groupe de traite (17, 40, 41) autorisant un mouvement ascendant et descendant du groupe de traite (34), ledit support d'unité de nettoyage/séchage (17, 40, 41) autorisant un mouvement ascendant et descendant de l'unité (28) adaptée pour soit pulvériser un liquide, soit pulvériser un liquide et sécher, le groupe de traite (34) étant disposé dans sa position inactive d'un côté de ladite surface et à l'extérieur de ladite surface, de telle sorte qu'il est à côté du pis de l'animal lorsque l'animal se trouve dans la stalle de traite, le support de groupe de traite (17, 40, 41) et le support d'unité de nettoyage/séchage (17, 40, 41) comprenant tous deux un premier pivot vertical (30) et étant reliés au sol de la stalle de traite dans la zone du premier pivot (30), chaque support (17) comportant un premier organe de liaison (40) pivotant autour du premier pivot vertical (30), un second pivot vertical et un second organe de liaison (41) connecté au premier organe de liaison (40) par le second pivot vertical (31), le groupe de traite (34) et la cuvette en forme de bol de l'unité (28), adaptée pour soit pulvériser un liquide, soit pulvériser un liquide et sécher, étant supportée sur le second organe de liaison respectif (41) du support (17) le premier pivot vertical (30) autorisant un mouvement de pivotement du support (17) et le second pivot vertical (31) autorisant un mouvement de pivotement des organes de liaison (40, 41) relativement l'un à l'autre, de façon que les mouvements résultants du groupe de traite (34) et de l'unité (28), adaptée pour soit pulvériser un liquide, soit pulvériser un liquide et sécher, soient générés de telle manière qu'ils s'approchent du pis de l'animal depuis le côté respectif de la stalle de traite, entre une patte avant et une patte arrière de l'animal et se déplacent alors vers l'arrière vers le pis, l'unité (28), adaptée pour pulvériser du liquide, soit pulvériser un liquide et sécher, étant située dans sa position inactive de l'autre côté de ladite surface et hors de cette surface, de façon à être près du pis de l'animal lorsque l'animal se trouve dans la stalle de traite.

2. Dispositif selon la revendication 1, **caractérisé en ce que** les moyens de pulvérisation (32) sont dirigés vers le haut.

3. Dispositif selon la revendication 1 ou 2, **caractérisé en ce que** la cuvette (16) en forme de bol est montée près de son centre sur le support (17) et comporte un conduit d'évacuation (43) situé dans le support (17).

4. Dispositif selon la revendication 3, **caractérisé en ce que** la cuvette en forme de bol (16) comporte un conduit d'air (44) par lequel peut transiter un courant d'air, la sortie du conduit d'air (44) étant dirigée vers les trayons de l'animal.

5. Dispositif selon la revendication 4, **caractérisé en ce que** le conduit d'air (44) constitue le conduit de décharge (43).

6. Dispositif selon l'une quelconque des revendications précédentes, **caractérisé en ce que** le mouvement de l'unité (28) s'effectue au moyen de moteurs électriques (38, 39, 47) commandés par ordinateur.
